# EUROPEAN PATENT SPECIFICATION

(11) **EP 3 325 288 B1**
(45) Date of publication and mention of the grant of the patent: **03.07.2019**
(21) Application number: 16738460.1
(22) Date of filing: 14.07.2016
(51) Int. Cl.: B60C 23/00

(54) **VALVE BLOCK FOR A CENTRAL TYRE INFLATION SYSTEM**
VENTILBLOCK FÜR EIN ZENTRALES REIFENFÜLLSYSTEM
BLOC DE SOUPAPES POUR UN SYSTÈME DE GONFLAGE DE PNEU CENTRAL

(30) Priority: 17.07.2015 GB 201512496
(43) Date of publication of application: 30.05.2018
(73) Proprietor: Jaguar Land Rover Limited, Coventry, Warwickshire CV3 4LF (GB)
(72) Inventor: DUNNING, Emma-Claire, Coventry Warwickshire CV3 4LF (GB); KING, Paul, Coventry Warwickshire CV3 4LF (GB)
(74) Representative: Lockey, Robert Alexander
(86) International application number: PCT/EP2016/066758
(87) International publication number: WO 2017/012975

(56) References cited:
- DE-A1- 4 009 687
- DE-A1-102008 062 066

## Description

### TECHNICAL FIELD

The present invention relates to a valve block for a central tyre inflation system (CTIS); to a CTIS; and to a vehicle.

### BACKGROUND

Central tyre inflation systems (CTISs) were originally developed for military applications, in particular for military applications concerning off-road military wheeled trucks and trailers. However, CTISs are nowadays incorporated into non-military vehicles such as specialist construction equipment and some agricultural vehicles.

A CTIS, as disclosed in DE102008062066 A1, typically comprises a compressed air source located on-board the vehicle and connected to one or more tyres. Tyre pressure can therefore be adjusted by operating the CTIS. The CTIS delivers compressed air to tyre supply lines. In some examples, the supply lines are integrated into the vehicle axles.

Various valves are provided in the CTIS to control flow of compressed air, those valves sometimes being grouped in a valve block to provide a compact arrangement. The flow of compressed air should be managed properly to minimise air use and to reduce the frequency with which the compressor is activated and deactivated so as to extend its operating life.

It is against this background that the present invention has been devised.

### SUMMARY OF THE INVENTION

Aspects and embodiments of the invention provide a valve block for a vehicle CTIS; a CTIS; and a vehicle as claimed in the appended claims.

According to an aspect of the present invention there is provided a valve block for a central tyre inflation system (CTIS) for a vehicle tyre. The valve block comprises a gallery,
a first compressed air port and a second compressed air port, and at least one inlet valve, the or each inlet valve being operable to open or close communication between the gallery and the first compressed air port. The valve block also comprises a control valve operable to open or close communication between the gallery and the second compressed air port, the control valve having an orifice that is smaller than an orifice of the or each inlet valve. The valve block further comprises at least one exhaust valve operable to open or close communication between the gallery and an exhaust outlet. The valve block further comprises at least one outlet valve operable to open or close communication between the gallery and a tyre supply line for supplying compressed air to the vehicle tyre.

The first compressed air port and the second compressed air source, in use, provide fluid communication between the valve block and respective first and second compressed air sources. In use, a first supply line may provide fluid communication between the first compressed air port and the compressor.

By configuring the control valve with a smaller orifice than the or each inlet valve, each valve can be optimised according to its respective function. For example, if the control valve is used for high pressure pneumatic control signals, a small orifice enables a reduction in the mass of air used for each control signal, thereby increasing the pneumatic efficiency of the valve block.

The valve block may comprise two inlet valves in communication with the first compressed air port, in which case the inlet valves divide a flow of compressed air supplied via the first compressed air port into two smaller flows. This means that the inlet valves can each be smaller and lower power than would be required if a single inlet valve were to handle the entire supply of compressed air. Having two inlet valves also creates redundancy, enabling the valve block to continue to operate if one of the inlet valves fails.

Similarly, the valve block may comprise two exhaust valves in communication with the exhaust outlet, which brings similar benefits to having two inlet valves.

The valve block may comprise a first supply line in the form of a conduit, which may be an internal conduit, providing communication between the first compressed air port and the second compressed air port. In such embodiments, the valve block may further comprise a supply line valve disposed in the conduit, the supply line valve being operable to open or close communication between the first compressed air port and the second compressed air port.

A second supply line may be provided within the valve block in the form of an internal flow path between the second compressed air port and the control valve.

Optionally the valve block comprises a supply line pressure sensor that is operable to provide a signal indicative of air pressure within the second supply line.

The valve block may comprise a first gallery pressure sensor, optionally in combination with a second gallery pressure sensor, that are configured to provide respective signals indicative of air pressure within the gallery.

Any of the or each inlet valve, the control valve, the or each exhaust valve and the or each outlet valve may be solenoid operated and/or configured as normally closed.

The valve block may comprise a relief valve. The relief valve may be solenoid operated and/or configured as normally open.

Another aspect of the invention provides a CTIS for at least one tyre of a vehicle, the CTIS comprising a valve block according to the above aspect. The CTIS further comprises a first compressed air source in fluid communication with the first compressed air port, a second compressed air source in fluid communication with the second compressed air port, and a tyre supply line for the at least one tyre of the vehicle, the or each tyre supply line having a respective supply valve.

The first compressed air source may comprise a compressor, and the second compressed air source may comprise a reservoir in fluid communication with the second compressed air port.

The CTIS may comprise a controller, for example an electronic control unit, arranged to control operation of the CTIS.

Each supply valve may be actuated pneumatically, for example using pneumatic control signals delivered through the control valve of the valve block.

The invention also extends to a vehicle comprising the valve block or the CTIS of the above aspects.

For the avoidance of doubt, references herein to a central tyre inflation system (CTIS) are to an apparatus for controlling the pressure of one or more tyres.

### BRIEF DESCRIPTION OF DRAWINGS

One or more embodiments of the present invention will now be described, by way of example only, with reference to the accompanying drawings, in which like components are assigned like numerals, and in which:-
Figure 1 is a schematic representation of a central tyre inflation system (CTIS) according to an embodiment of the invention;
Figure 2 is a schematic representation of a valve arrangement according to an embodiment of the invention, the valve arrangement forming part of the CTIS shown in Figure 1; and
Figure 3 is a vehicle system boundary diagram representing the CTIS shown in Figures 1 and 2.

### DETAILED DESCRIPTION

In the following description and in the drawings, reference letters are used to collectively or un-specifically identify equivalent or essentially equivalent components. Where necessary, a specific component in a collection of equivalent or essentially equivalent components is identified by suffixing a reference letters in subscript format.

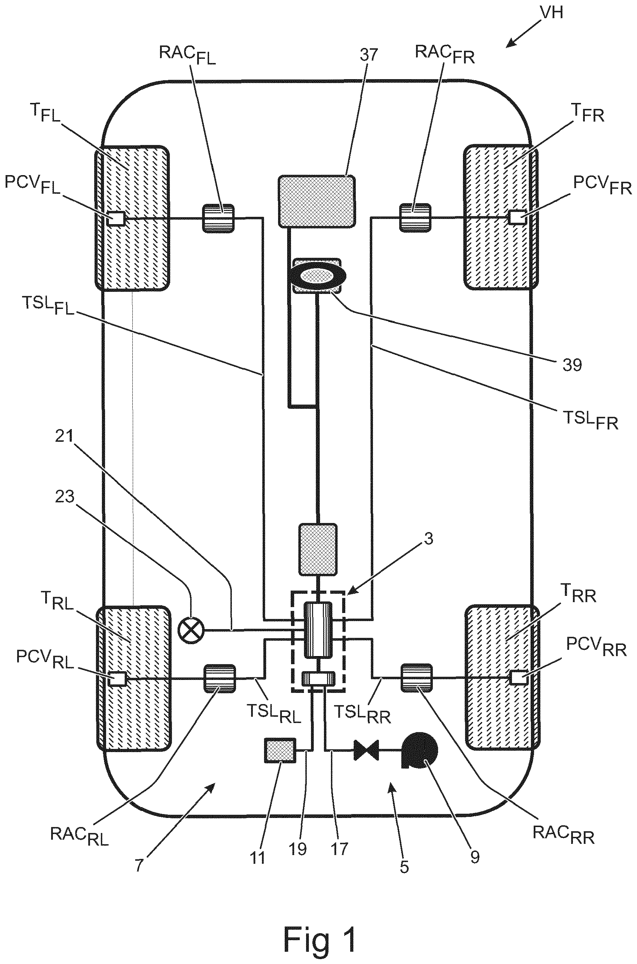

Embodiments of the invention provide valve blocks for use in a CTIS. To provide context for the invention, a CTIS 1 into which such valve blocks can be incorporated is first described with reference to Figure 1. It should be appreciated that the CTIS 1 described here is merely representative of the type of system that may be used, and many other variations are possible.

The CTIS 1 is installed in a vehicle VH that has four wheels W each having a tyre T mounted on a wheel hub (not shown). The wheels W (and the tyres T) are identified herein based on their relative position on the vehicle VH, namely: front left (FL), front right (FR), rear left (RL) and rear right (RR). This nomenclature is employed to identify the components of the CTIS 1 associated with the respective tyres T. The front tyres T_{FR}, T_{FL} are mounted on a front axle and the rear wheels T_{RR}, T_{RL} are mounted on a rear axle of the vehicle.

The CTIS 1 comprises four pneumatic control valves PCV fixedly mounted to the wheel hubs and arranged to control the supply of compressed air to and from a respective tyre cavity. The pneumatic control valves PCV can therefore be thought of as supply valves. The pneumatic control valves PCV are pneumatically operated in response to changes in the pressure in the associated tyre supply line TSL. Specifically, the pneumatic control valves PCV are operable to cycle sequentially (i.e. to toggle) between an open state and a closed state in response to the application of a pressure exceeding a valve activation pressure. The pneumatic control valves PCV are stable in both the open and closed state via a latching mechanism, i.e. they can each be considered as a pressure actuated bi-stable valve. Herein the application of air at a pressure and time sufficient to switch the valve from one state to its other state, i.e. from open to closed or from closed to open, is referred to as "toggling" the valve, and the application of said air in this manner is referred to as a high pressure (pneumatic) control signal.

UK Patent application GB 2516704 the contents of which are incorporated herein by reference in their entirety, describes such pneumatic latching valves suitable for a CTIS system. It will be appreciated that each pneumatic control valve could have additional operating states which are cycled through sequentially in dependence on said pneumatic control signal.

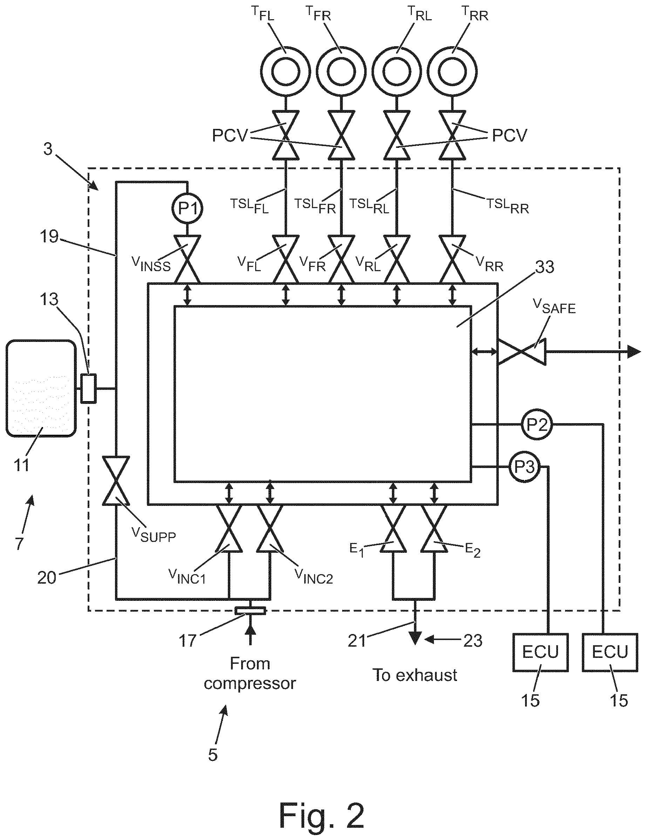

The CTIS 1 further comprises a valve block 3 according to an embodiment of the invention for controlling the supply of compressed air to each of the pneumatic control valves PCV. The valve block 3 is described in more detail below with reference to Figure 2, but for now it is noted that the valve block 3 is fluidly coupled to a first compressed air source 5 and to a second compressed air source 7.

In the configuration shown in Figure 1, the first compressed air source 5 provides air at a high flow rate and low pressure (HF/LP); and the second compressed air source 7 is operable to provide air at a higher pressure. As described herein, the first and second compressed air sources 5, 7 are distinct from each other. In the present arrangement, the first compressed air source 5 comprises a compressor 9; and the second compressed air source comprises a reservoir 11.

The activation pressure of each said pneumatic control valve PCV is below the pressure of the second compressed air source 7. Therefore the second compressed air source 7 can be applied for a short duration to switch one or more selected pneumatic control valves PCV from a closed state to an open state, and vice versa.

An electronic control unit (ECU) 15 is provided to control operation of the CTIS 1. Specifically, the ECU 15 is configured to control operation of the valve block 3 and the compressor 9.

A tyre supply line TSL supplies compressed air from the valve block 3 to each tyre T. Specifically, the CTIS 1 comprises a front left tyre supply line TSL_{FL}, a front right tyre supply line TSL_{FR}, a rear left tyre supply line TSL_{RL} and a rear right tyre supply line TSL_{RR}. The pneumatic control valves PCV are provided at the ends of the tyre supply lines TSL to control the supply of compressed air to the respective tyres T. A section of each tyre supply line TSL extends along the respective vehicle axles to supply compressed air to the pneumatic control valves PCV mounted in each wheel hub. A rotary air coupling (RAC) is provided in each tyre supply line TSL to provide a fluid coupling to supply compressed air from the valve block 3 to the section of each tyre supply line TSL disposed in the vehicle axle.

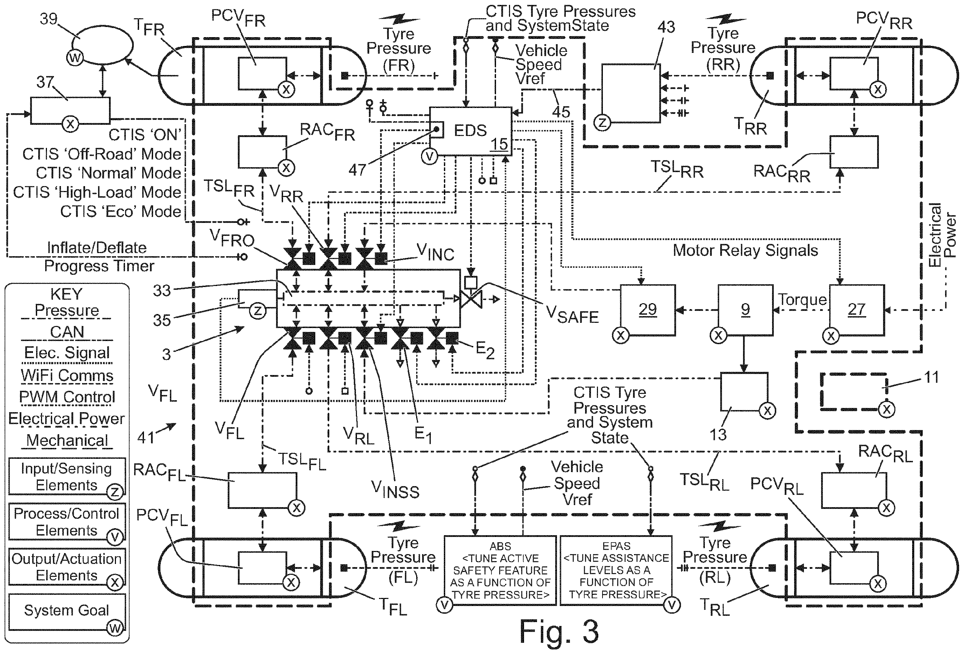

The compressor 9 is a dedicated compressor for the CTIS 1 and is controlled, directly or indirectly, by the ECU 15. The compressor 9 comprises an electric motor 27 (shown in Figure 3) and has an operating pressure of approximately 9 bar. A dryer unit 29 (shown in Figure 3) is coupled to the compressor 9 partway through a first compressed air supply line 31 (shown in Figure 3) connecting the compressor 9 to the valve block 3.

The valve block 3 will now be described in more detail with reference to Figure 2.

The valve block 3 comprises first and second inlet valves V_{INC1}, V_{INC2}, and a control valve V_{INSS}. The first and second inlet valves V_{INC1}, V_{INC2} operatively control the supply of compressed air from the first compressed air source 5 which is connected to the valve block 3 at a first compressed air port 17. The first supply line connects the first compressed air port 17 to the inlet valves V_{INC1}, V_{INC2}. The first supply line divides into two portions upstream of the inlet valves V_{INC1}, V_{INC2}, each portion supplying a respective one of the first and second inlet valves V_{INC1}, V_{INC2}. Compressed air delivered through the first and second inlet valves V_{INC1}, V_{INC2} is ultimately used to inflate one or more of the tyres T, and so the first and second inlet valves V_{INC1}, V_{INC2} can be considered to be tyre inflation inlet valves.

By providing two inlet valves, the mass flow rate of air through each of the first and second inlet valves V_{INC1}, V_{INC2} is halved relative to the air supplied through the first compressed air port 17. This allows for the use of smaller, lower power and therefore less costly valve components than would be required if there were a single inlet handling the entire compressed air supply. Moreover, smaller valves require lower valve lift, resulting in reduced noise and vibration.

The use of two valve inlets V_{INC1}, V_{INC2} to handle compressed air supplied through the first compressed air port 17 also builds redundancy into the system, in that if one of the valves V_{INC1}, V_{INC2} fails, the other can continue to admit compressed air into the valve block 3, albeit at a reduced flow rate, enabling the CTIS 1 to continue operation until the faulty valve V_{INC1}, V_{INC2} can be repaired.

The first and second inlet valves V_{INC1}, V_{INC2} each have an orifice of relatively large diameter, for example in the range of 3.5mm to 5mm, for example around 4mm, enabling them to deliver compressed air at a sufficient mass flow rate whilst at relatively low pressure. This minimises the restriction created by the valves V_{INC1}, V_{INC2}, which in turn reduces the work required from the compressor 9, which need only deliver air at a pressure that is slightly higher than the tyre pressure to pump air through the first and second inlet valves V_{INC1}, V_{INC2} for inflating tyres T. Accordingly the or each inlet valve (V_{INC1}, V_{INC2}) may have a valve orifice having a diameter of substantially 4 times the diameter of that of the control valve (V_{INSS}).

The first and second inlet valves V_{INC1}, V_{INC2} are typically substantially identical and so present equal restrictions to air flow. This ensures that the flow of compressed air supplied via the first compressed air port 17 divides evenly between the first and second inlet valves V_{INC1}, V_{INC2}. This minimises the maximum flow rate that either of the first and second inlet valves V_{INC1}, V_{INC2} must handle, in turn enabling the use of low power valves as noted above. Having similar components also eases manufacture and assembly.

The control valve V_{INSS} operatively controls the supply of compressed air from the second compressed air source 7 which is connected to the valve block 3 via the second compressed air port 13. A second supply line 19 is provided internally within the valve block to place the second compressed air port 13 in fluid communication with the control valve V_{INSS}. As described in more detail later, compressed air is pulsed at high pressure from the second compressed air source 7 to toggle the pneumatic control valves PCV to open or close communication to the tyres T. The pulses of compressed air can be thought of as pneumatic control signals, and so the control valve V_{INSS} acts as a control valve. The control valve V_{INSS} has a relatively small diameter orifice, in the region of 0.8mm to 1.2mm, for example the valve orifice of the control valve V_{INSS} may be around 1mm in this embodiment, which reduces the mass of air that must be pulsed through the control valve V_{INSS} at high pressure to toggle a pneumatic control valve PCV, i.e. the control valve V_{INSS} has a smaller valve orifice than the inlet valves V_{INC1}, V_{INC2}.

By providing a dedicated valve for handling pneumatic control signals, namely the control valve V_{INSS}, the functions of pneumatic control and tyre inflation can be separated. This allows each valve to be optimised according to the specific task that it is required to perform. In particular, this means that a smaller valve can be used for the pneumatic control signals, meaning that a smaller mass of compressed air is expended in each operation. This means that the reservoir can support more operations before it requires re-pressurising than if a single, larger valve were to be used for both pneumatic control and tyre inflation.

Configuring the valve block 3 to separate pneumatic control from inflation also creates an opportunity to perform some functions in parallel. For example, deflation of a tyre T, for tyre pressure measurements or for any other reason, can be conducted at the same time as measuring the pressure in the reservoir 11, as the reservoir 11 can be isolated from the rest of the system by closing both the supply valve V_{SUPP} and the control valve V_{INSS}. Similarly, the reservoir 11 can be pressurised simultaneously with deflating one or more tyres T. As a further example, the reservoir 11 can supply compressed air out of the first compressed air port 17, which may be useful for purging a dryer of the CTIS 1.

Running operations in parallel in this manner is efficient and minimises the overall time required to complete all of the operations. It may also enable a reduction in compressor activation cycles, which as already noted can extend the operating life of the compressor 9.

A particular benefit of being able to pressurise the reservoir 11 whilst performing other operations is that over time components of the CTIS become worn and so more air may be required to toggle the pneumatic control valves PCV, meaning that additional pressurising operations may be required to maintain the reservoir 11 at an acceptable working pressure. The reservoir 11 pressure may even need to be topped up during a tyre deflation or monitoring operation, and the valve block 3 of this embodiment advantageously allows for this without having to interrupt deflation.

A pressure sensor P1 is disposed between the reservoir 11 and the control valve V_{INSS} to enable monitoring of the pressure in the reservoir 11.

The reservoir 11 is pressurised by the compressor 9 through an internal conduit 20 between the first compressed air port 17 and the second compressed air port 13 under the control of a supply valve V_{SUPP} disposed in the conduit 20. To pressurise the reservoir 11, the supply valve V_{SUPP} is opened and the first and second inlet valves V_{INC1}, V_{INC2}, and the control valve V_{INSS} are closed. Compressed air is then delivered by the compressor 9 through the first compressed air port 17 and the conduit 20 to the reservoir 11. Once the desired pressure as indicated by pressure sensor P1, or alternatively as indicated by a separate pressure sensor within the reservoir, is achieved in the reservoir 11, typically around 8 bar, the supply valve V_{SUPP} is closed and the compressor 9 can be deactivated.

This pressurising operation is typically performed immediately following tyre inflation without switching the compressor 9 off. This reduces the number of on/off cycles for the compressor 9 which can help to extend its operating life.

The valve block 3 comprises four outlet valves (collectively referenced as V_{O}) for controlling the supply of compressed air to the respective tyre supply lines TSL. In particular, the valve block 3 comprises: a front left outlet valve V_{FLO} for controlling the supply of compressed air to the front left tyre supply line TSL_{FL}; a rear left outlet valve V_{RLO} for controlling the supply of compressed air to the rear left tyre supply line TSL_{RL}; a front right outlet valve V_{FRO} for controlling the supply of compressed air to the front right tyre supply line TSL_{FR}; and a rear right outlet valve V_{RRO} for controlling the supply of compressed air to the rear right air supply line TSL_{RR}. The outlet valves V_{O} are operable independently of each other to enable the selective supply of compressed air to one or more of the tyre supply lines TSL.

The valve block 3 also comprises first and second exhaust valves E_{1,} E₂ coupled to an exhaust line 21. The exhaust line 21 terminates with an exhaust outlet 23 which is open to atmosphere to vent exhaust air from the CTIS 1. The first and second exhaust valves E_{1,} E₂ are operable to control the flow of exhaust air to the exhaust line 21, for example during tyre deflation.

A safety valve V_{SAFE} is also provided in the valve block 3. The safety valve V_{SAFE} is operable as a relief valve to vent to atmosphere any excess air which might accumulate in the valve block 3 due, for example, to malfunction of any of the components of the CTIS 1.

The inlet valves V_{INC1}, V_{INC2}, V_{INSS}, the supply valve V_{SUPP}, the outlet valves V_{O} and the exhaust valves E₁, E₂ are solenoid valves having a normally-closed configuration (illustrated by a filled symbol in Figure 2). The inlet valves V_{INC1}, V_{INC2}, V_{INSS}, the supply valve V_{SUPP}, the outlet valves V_{O} and the exhaust valves E₁, E₂ are operable independently of each other and are actuated by control signals received from the ECU 15. The safety valve V_{SAFE} is also a solenoid valve but has a normally-open configuration (illustrated by an open symbol in Figure 2). The safety valve V_{SAFE} is closed by receiving a control signal from the ECU 15.

A fluid gallery 33 is provided in the valve block 3. The gallery 33 is open to each of: the outlet valves V_{O}, the inlet valves V_{INC1}, V_{INC2}, V_{INSS}, the supply valve V_{SUPP}, the exhaust valves E₁, E₂, and the safety valve V_{SAFE}.

The valve block 3 houses two further pressure sensors P2, P3 arranged to measure the pressure in the gallery 33. Pressure sensor P2 is the primary sensor, while pressure sensor P3 is connected to a watchdog ECU 35 that operates in parallel with the ECU 15 for diagnostic purposes. The gallery 33 can be selectively placed in fluid communication with one or more of the tyre supply lines TSL by opening one or more of the outlet valves V_{O}. In the present arrangement, the pressure sensors P2, P3 measure the pressure in the individual tyre supply lines TSL by placing the tyre supply line TSL in fluid communication with the gallery 33. By opening the pneumatic control valve PCV associated with that tyre supply line TSL, the pressure sensors P2, P3 can measure the air pressure in the tyre cavity (hereinafter referred to, for simplicity, as the tyre pressure).

The gallery 33 receives compressed air from each of said first and second compressed air sources 5, 7 via the first and second inlet valves V_{INC1}, V_{INC2}, and the control valve V_{INSS}. The first and second inlet valves V_{INC1}, V_{INC2} are operable to control the supply of compressed air from the first compressed air source 5 to the gallery 33. The control valve V_{INSS} is operable to control the supply of compressed air from the second compressed air source 7 to the gallery 33.

In use, the first compressed air source 5 is the primary source of compressed air for inflating the tyres T. One or more of the tyre supply lines TSL can be placed in communication with the first compressed air source 5 by opening the first and second inlet valves V_{INC1}, V_{INC2} and the appropriate outlet valves V_{O}.

The second compressed air source 7 provides a higher pressure supply which is controlled by the control valve V_{INSS} to generate a pneumatic control signal as described above for controlling operation of one or more of said pneumatic control valves PCV to tyres T for which the respective outlet valves V_{O} are open, i.e. to toggle the valves from one stable state to the other stable state. Specifically, the control valve V_{INSS} is operated to release short pulses of high pressure air (e.g. at a pressure of 5-10 barg) stored in the reservoir 11 into the gallery 33 to generate the pneumatic control signal to cycle the pneumatic control valve(s) PCV in communication with the gallery 33. The pneumatic control valve(s) PCV cycle through their respective operating states in response to the pneumatic control signal and, therefore, can be operated to control the supply of compressed air to and from the respective tyres T. By opening the pneumatic control valve(s) PCV, one or more of the tyres T can be placed in communication with the respective tyre supply lines TSL.

The valve block 3 can be operated to place the tyre supply lines TSL in communication with the first compressed air source 5 to inflate one or more of said tyres T; or in communication with the exhaust line 21 to deflate one or more of said tyres T. Furthermore, the valve block 3 can be operated to measure the pressure of the air in the tyres T.

To measure an individual tyre pressure of a wheel having a closed PCV, the valve block 3 is operated to close the first and second inlet valves V_{INC1}, V_{INC2}, the control valve V_{INSS}, and the exhaust valves E₁, E₂. The outlet valve V_{O} corresponding to the tyre supply line TSL for the particular tyre is opened to place the tyre supply line TSL in fluid communication with the gallery 33. A pneumatic control signal is then generated by operating the control valve V_{INSS} to open the pneumatic control valve PCV for that tyre T. The tyre T is thereby placed in communication with the gallery 33 via the corresponding tyre supply line TSL. The pressure sensors P2, P3 then measure the air pressure in the gallery 33 to determine the tyre pressure for that particular tyre T. Once the pressure has been measured, if no further action is required in relation to that tyre T a pneumatic control signal may be generated by operating the control valve V_{INSS} to close the pneumatic control valve PCV.

If the above operation causes the pressure within the reservoir 11 to fall below its operating pressure, the reservoir 11 is re-pressurised by the compressor 9 using the procedure outlined above.

The CTIS 1 according to the present arrangement uses two pressure sensors P2, P3 located in the gallery 33 for measuring the pressure in the gallery 33. It will be appreciated that more pressure sensors could be provided. For example, a pressure sensor could be provided in communication with each tyre supply line TSL. Equally, a separate valve block 3 could be provided for each tyre T or for each axle.

The ECU 15 is programmed to control the overall operation of the CTIS 1. The ECU 15 is configured to determine an inflation time or a deflation time. The inflation time is the period of time over which compressed air must be supplied from the first compressed air source 5 to the one or more tyre(s) T to reach the target tyre pressure. The inflation time is a function of one or more of the following: the pressure differential between the target tyre pressure and the current tyre pressure (the current tyre pressure being the tyre pressure prior to inflation); the operating characteristics of the first compressed air source (e.g. nominal pressure and flow rate); the number of tyres T which are being inflated at any given time (if more than one tyre T can be inflated simultaneously); and the volume and/or temperature of the tyre cavities. It will be appreciated that is not necessarily equivalent to a compressor run time as the compressed air generated by the compressor 9 may be buffered in the gallery 33 following tyre inflation.

The deflation time is the period of time over which compressed air must be vented from the one or more tyre(s) T through the first and second exhaust valves E₁, E₂ to reach the target tyre pressure. The deflation time is also a function of the number of tyres T being simultaneously deflated, of the current tyre pressure (i.e. the tyre pressure before deflation), of the target tyre pressure and/or the pressure differential to be achieved by tyre deflation and/or of the volume and/or temperature of the tyre cavities.

In the present arrangement, the ECU 15 retrieves the inflation time and/or the deflation time from a look-up table stored in a memory device accessible to the ECU 15. The look-up table can take the form of a double entry table indexed according to the current tyre pressure and the target tyre pressure. Based on the current tyre pressure and the target tyre pressure, the ECU 15 can retrieve from the look-up table a value corresponding to, or representative of, the predetermined tyre inflation time for a given flow rate and air supply air pressure. Alternatively the look-up table may give a volume of air required and the ECU calculates the inflation time based on measured or estimated pressures and flow rates and the retrieved volumetric air requirement. Other methods may be useful.

The ECU 15 controls tyre inflation and/or deflation by opening and closing, as appropriate, the various valves V_{O}, V_{INC1}, V_{INC2}, V_{SUPP}, V_{INSS}, E_{1,} E₂ of the valve block 3. Tyre inflation and deflation can thus potentially be performed one tyre T at a time, or according to any combination of tyres T simultaneously. In the present arrangement, however, the ECU 15 is programmed to simultaneously deflate all the tyres T, or in pairs, and to inflate the tyres T one at a time or, simultaneously in pairs. If deflated/inflated in pairs, the pairs of tyres T are selected according to their location at the front or rear of the vehicle VH. In this event, the tyres T are said to be deflated/inflated by the CTIS 1 'per axle'.

In the present arrangement, the ECU 15 uses an algorithm to refer the current and target tyre pressures to a nominal tyre temperature of 25°C and to the case of tyre inflation of an individual tyre T. Alternatively, different look-up tables each corresponding to a tyre temperature and/or to the case of tyre inflation for two or more tyres T could be used. Compressed air losses in the CTIS 1 may affect the period of time taken for the CTIS 1 to achieve a predetermined pressure. The values stored in the look-up table could be dynamically updated to take into account the effects of said losses. The values could, for example, be updated via one or more self-learning algorithms.

The ECU 15 is in addition configured to provide information relating to the status and/or operation of the CTIS 1 to a vehicle user via a human-machine interface (HMI) 37. A dashboard (not shown) of the vehicle VH is in addition equipped with a visual output, for example a tyre operation dial 39, to provide a user with information as to whether compressed air is being supplied to, or exhausted from, the tyre cavities.

Figure 3 illustrates the relationship between the main mechanical components of the CTIS 1 described herein (which incorporates the valve block 3 illustrated in Figure 2) and a vehicle control system 41, and so provides wider context for the invention. The vehicle control system 41 comprises the ECU 15. The ECU 15 is programmed to implement the control strategies and procedures described herein. In this arrangement, the ECU 15 receives from a tyre pressure monitoring system (TPMS) 43, via a vehicle controller area network (CAN) 45, real-time information relating to the current tyre pressures for the four tyres T of the vehicle VH. The pressure sensor communicates directly with the ECU 15 via electric signals representative of the pressure measured by the pressure sensors P2, P3 in the gallery 33 of the valve block 3. As described earlier, the pneumatic control valves PCV and the various valves V, I, E of the valve block 3 can be configured such that the pressure sensors P2, P3 measure a pressure which is representative of the pressure inside each of the tyres T. The TPMS 43 also monitors the temperature inside the tyres T so that the tyre pressures can be referred to a nominal temperature of 25 degrees C using appropriate algorithms.

The ECU 15 implements tyre inflation and/or deflation strategies as described herein on the basis of the relationship between the target tyre pressures and the current tyre pressures as measured by the TPMS 43 and/or pressure sensors P2, P3. To do this, the ECU 15 is required to control the various mechanical components of the CTIS 1. As seen in Figure 3, the ECU 15 is configured to control the outlet valves V_{O} via a pulse width modulation (PWM) control network 47. Via the same PWM control network 47, the ECU 15 also controls the purging function of the dryer unit 29, the electric motor 27 which drives the compressor 9, the first and second inlet valves V_{INC1}, V_{INC2}, the control valve V_{INSS}, the supply valve V_{SUPP}, the exhaust valves E_{1,} E₂ and the safety valve V_{SAFE}. It will be appreciated that for clarity that the first and second inlet valves V_{INC1}, V_{INC2} are collectively referred to as V_{INC} in Fig 3.

As described herein, the target tyre pressures can be manually selected by the driver of the vehicle via the human-to-machine interface (HMI) 37 or they can be automatically selected by the vehicle control system 41 on the basis of other information including vehicle driving modes. The HMI 37 communicates with the ECU 15 via the vehicle CAN 45. As an alternative to PWM control full cycle on/off solenoid valves could be used.

It will be appreciated by a person skilled in the art that the invention could be modified to take many alternative forms to that described herein, without departing from the scope of the appended claims.

## Claims

1. A valve block (3) for a central tyre inflation system (CTIS) (1) for a vehicle tyre (T), the valve block (3) comprising:
a gallery (33);
a first compressed air port (17) and a second compressed air port (13);
at least one inlet valve (V_{INC1}, V_{INC2}), the or each inlet valve (V_{INC1}, V_{INC2}) being operable to open or close communication between the gallery (33) and the first compressed air port (17);
a control valve (V_{INSS}) operable to open or close communication between the gallery (33) and the second compressed air port 13, wherein the control valve (V_{INSS}) has an orifice that is smaller than an orifice of the or each inlet valve;
at least one exhaust valve (E₁, E₂) operable to open or close communication between the gallery (33) and an exhaust outlet (23); and
at least one outlet valve (V_{O}) operable to open or close communication between the gallery (33) and a tyre supply line (TSL) for supplying compressed air to the vehicle tyre (T).

2. The valve block (3) of claim 1, comprising a first supply line between the first compressed air port (17) and the two inlet valves (V_{INC1}, V_{INC2}).

3. The valve block (3) of claim 1 or claim 2, comprising two exhaust valves (E₁, E₂) in communication with the exhaust outlet (23).

4. The valve block (3) of any preceding claim, comprising an internal conduit (20) providing fluid communication between the first compressed air port (17) and the second compressed air port (13), optionally further comprising a supply line valve (V_{SUPP}) disposed in the conduit (20), the supply line valve (V_{SUPP}) being operable to open or close communication between the first compressed air port (17) and the second compressed air port (13).

5. The valve block of any preceding claim comprising a second supply line between the second compressed air port (13) and the control valve (V_{INSS}).

6. The valve block (3) of any preceding claim, comprising a supply line pressure sensor (P1) that is operable to provide a signal indicative of air pressure within the second supply line (19).

7. The valve block (3) of any preceding claim, comprising a first gallery pressure sensor (P2) that is configured to provide a first signal indicative of air pressure within the gallery (33), optionally further comprising a second gallery pressure sensor (P3) that is configured to provide a second signal indicative of air pressure within the gallery (33).

8. The valve block (3) of any preceding claim, wherein any of the or each inlet valve (V_{INC1}, V_{INC2}), the control valve (V_{INSS}), the or each exhaust valve (E₁, E₂) and the or each outlet valve (V_{O}) is solenoid operated.

9. The valve block (3) of any preceding claim, wherein any of the or each inlet valve (V_{INC1}, V_{INC2}), the control valve (V_{INSS}), the or each exhaust valve (E₁, E₂) and the or each outlet valve (V_{O}) is configured as normally closed.

10. The valve block (3) of any preceding claim, comprising a relief valve (V_{SAFE}), optionally wherein the relief valve (V_{SAFE}) is solenoid operated, further optionally wherein the relief valve (V_{SAFE}) is configured as normally open.

11. The valve block (3) of any preceding claim, wherein the or each inlet valve (V_{INC1}, V_{INC2}) has a valve orifice having a diameter of substantially 4 times the diameter of that of the control valve (V_{INSS}), and/or, wherein the control valve (V_{INSS}) has a valve orifice of 0.8mm to 1.2mm, and/or wherein the or each inlet valve (V_{INC1}, V_{INC2}) has a valve orifice of 3.5mm to 5mm.

12. A CTIS (1) for at least one tyre (T) of a vehicle (VH), the CTIS (1) comprising:
a valve block (3) according to any preceding claim;
a first compressed air source (5) connected to the first compressed air port (17);
a second compressed air source (7) connected to the second compressed air port (13); and
a tyre supply line (TSL) for the at least one tyre (T) of the vehicle (VH), the or each tyre supply line (TSL) having a respective supply valve (PCV).

13. The CTIS (1) of claim 12, wherein the first compressed air source (5) comprises a compressor (9) and/or wherein the second compressed air source (7) comprises a reservoir (11) in communication with the second compressed air port (13).

14. The CTIS (1) of claim 12 or claim 13, comprising a controller (15) arranged to control operation of the CTIS (1) and/or wherein each supply valve (PCV) is actuated pneumatically.

15. A vehicle comprising the valve block (3) of any of claims 1 to 11, or the CTIS (1) of any of claims 12 to 14.

## Patentansprüche

1. Ventilblock (3) für ein zentrales Reifenaufblassystem (CTIS) (1) für einen Fahrzeugreifen (T), wobei der Ventilblock (3) Folgendes umfasst:
eine Galerie (33);
einen ersten Druckluftanschluss (17) und einen zweiten Druckluftanschluss (13);
mindestens ein Einlassventil (V_{INC1}, V_{INC2}), wobei das oder jedes Einlassventil (V_{INC1}, V_{INC2}) funktionsfähig ist, um die Verbindung zwischen der Galerie (33) und dem ersten Druckluftanschluss (17) zu öffnen oder zu schließen;
ein Steuerventil (V_{INSS}), das funktionsfähig ist, um die Verbindung zwischen der Galerie (33) und dem zweiten Druckluftanschluss 13 zu öffnen oder zu schließen, wobei das Steuerventil (V_{INSS}) eine Öffnung aufweist, die kleiner als eine Öffnung des oder jedes Einlassventils ist;
mindestens ein Auslassventil (E₁, E₂), das funktionsfähig ist, um die Verbindung zwischen der Galerie (33) und einem Abluftauslass (23) zu öffnen oder zu schließen; und
mindestens ein Auslassventil (V_{O}), das derart funktionsfähig ist, dass es die Verbindung zwischen der Galerie (33) und einer Reifenversorgungsleitung (TSL) öffnet oder schließt, um dem Fahrzeugreifen (T) Druckluft zuzuführen.

2. Ventilblock (3) nach Anspruch 1, der eine erste Versorgungsleitung zwischen dem ersten Druckluftanschluss (17) und den beiden Einlassventilen (V_{INC1}, V_{INC2}) umfasst.

3. Ventilblock (3) nach Anspruch 1 oder Anspruch 2, der zwei Auslassventile (E₁, E₂) in Verbindung mit dem Abluftauslass (23) umfasst.

4. Ventilblock (3) nach einem der vorhergehenden Ansprüche, der eine interne Leitung (20) umfasst, die eine Fluidverbindung zwischen dem ersten Druckluftanschluss (17) und dem zweiten Druckluftanschluss (13) herstellt, und wahlweise ferner ein Versorgungsleitungsventil umfasst (V_{SUPP}), das in der Leitung (20) angeordnet ist, wobei das Versorgungsleitungsventil (V_{SUPP}) funktionsfähig ist, um die Verbindung zwischen dem ersten Druckluftanschluss (17) und dem zweiten Druckluftanschluss (13) zu öffnen oder zu schließen.

5. Ventilblock nach einem der vorhergehenden Ansprüche, der eine zweite Versorgungsleitung zwischen dem zweiten Druckluftanschluss (13) und dem Steuerventil (V_{INSS}) umfasst.

6. Ventilblock (3) nach einem der vorhergehenden Ansprüche, mit einem Versorgungsleitungsdrucksensor (P1), der funktionsfähig ist, ein Signal, welches den Luftdruck in der zweiten Versorgungsleitung (19) anzeigt, bereitzustellen.

7. Ventilblock (3) nach einem der vorhergehenden Ansprüche, umfassend einen ersten Galeriedrucksensor (P2), der dazu konfiguriert ist, um ein erstes Signal bereitzustellen, das den Luftdruck in der Galerie (33) anzeigt, wahlweise ferner umfassend einen zweiten Galeriedrucksensor (P3), der konfiguriert ist, um ein zweites Signal bereitzustellen, das den Luftdruck in der Galerie (33) anzeigt.

8. Ventilblock (3) nach einem der vorhergehenden Ansprüche, wobei jedes des oder jedes Einlassventils (V_{INC1}, V_{INC2}), des Steuerventils (V_{INSS}), des oder jedes Abluftventils (E₁, E₂) und des oder jedes Auslassventils (V_{O}) magnetisch betätigt ist.

9. Ventilblock (3) nach einem der vorhergehenden Ansprüche, wobei jedes des oder jedes Einlassventils (V_{INC1}, V_{INC2}), des Steuerventils (V_{INSS}), des oder jedes Abluftventils (E₁, E₂) und des oder jedes Auslassventils (V_{O}) als normal geschlossen konfiguriert ist.

10. Ventilblock (3) nach einem der vorhergehenden Ansprüche, umfassend ein Überdruckventil (V_{SAFE}), wobei wahlweise das Entlastungsventil (V_{SAFE}) magnetisch betätigt ist, ferner wahlweise wobei das Entlastungsventil (V_{SAFE}) als normal geöffnet konfiguriert ist.

11. Ventilblock (3) nach einem der vorhergehenden Ansprüche, wobei das oder jedes Einlassventil (V_{INC1}, V_{INC2}) eine Ventilöffnung mit einem Durchmesser von im Wesentlichen dem 4-fachen Durchmesser des Steuerventils (V_{INSS}) aufweist, und/oder wobei das Steuerventil (V_{INSS}) eine Ventilöffnung von 0,8 mm bis 1,2 mm aufweist, und/oder wobei das oder jedes Einlassventil (V_{INC1}, V_{INC2}) eine Ventilöffnung von 3,5 mm bis 5 mm aufweist.

12. CTIS (1) für mindestens einen Reifen (T) eines Fahrzeugs (VH), wobei das CTIS (1) Folgendes umfasst:
einen Ventilblock (3) nach einem der vorhergehenden Ansprüche;
eine erste Druckluftquelle (5), die mit dem ersten Druckluftanschluss (17) verbunden ist;
eine zweite Druckluftquelle (7), die mit dem zweiten Druckluftanschluss (13) verbunden ist; und
eine Reifenversorgungsleitung (TSL) für den mindestens einen Reifen (T) des Fahrzeugs (VH), wobei die oder jede Reifenversorgungsleitung (TSL) ein entsprechendes Versorgungsventil (PCV) aufweist.

13. CTIS (1) nach Anspruch 12, wobei die erste Druckluftquelle (5) einen Kompressor (9) umfasst und/oder wobei die zweite Druckluftquelle (7) einen Vorratsbehälter (11) in Verbindung mit dem zweiten Druckluftanschluss (13) umfasst.

14. CTIS (1) nach Anspruch 12 oder Anspruch 13, umfassend eine Steuervorrichtung (15), die angeordnet ist, um den Betrieb des CTIS (1) zu steuern und/oder wobei jedes Versorgungsventil (PCV) pneumatisch betätigt wird.

15. Fahrzeug, das den Ventilblock (3) nach einem der Ansprüche 1 bis 11 oder das CTIS (1) nach einem der Ansprüche 12 bis 14 umfasst.

## Revendications

1. Bloc de soupapes (3) pour un système central de gonflage de pneumatique (CTIS) (1) pour un pneumatique de véhicule (T), le bloc de soupapes (3) comprenant :
une galerie (33) ;
un premier orifice d'air comprimé (17) et un deuxième orifice d'air comprimé (13) ;
au moins une vanne d'entrée (V_{1NC1}, V_{1NC2}), la ou chaque vanne d'entrée (V_{INC1}, V_{1NC2}) pouvant être actionnée pour ouvrir ou fermer la communication entre la galerie (33) et le premier orifice d'air comprimé (17) ;
une vanne de commande (V_{INSS}) permettant d'ouvrir ou de fermer la communication entre la galerie (33) et le deuxième orifice d'air comprimé 13, dans lequel la vanne de commande (V_{INSS}) présente un orifice qui est plus petit qu'un orifice de la ou de chaque vanne d'entrée ;
au moins une soupape d'échappement (E₁, E₂) pouvant fonctionner pour ouvrir ou fermer la communication entre la galerie (33) et une sortie d'échappement (23) ; et
au moins une soupape de sortie (V_{O}) pouvant être actionnée pour ouvrir ou fermer la communication entre la galerie (33) et une conduite d'alimentation en pneumatique (TSL) pour alimenter en air comprimé le pneumatique (T) du véhicule.

2. Bloc de vannes (3) selon la revendication 1, comprenant une première conduite d'alimentation entre le premier bloc de vannes comprimé et le premier bloc de vannes comprimé (17) et les deux vannes d'entrée (V_{1NC1}, V_{1NC2}).

3. Bloc de soupapes (3) selon la revendication 1 ou 2, comprenant deux soupapes d'échappement (E₁, E₂) en communication avec la sortie d'échappement (23).

4. Bloc de vannes (3) de toute revendication précédente, comprenant un conduit interne (20) assurant une communication de fluide entre le premier orifice d'air comprimé (17) et le second orifice d'air comprimé (13), comprenant éventuellement en outre une vanne de conduite d'alimentation (V_{SUPP}) disposée dans le conduit (20), la vanne d'alimentation (V_{SUPP}) étant actionnée pour ouvrir ou fermer la communication entre le premier orifice d'air comprimé (17) et le second orifice d'air comprimé l'orifice d'entrée d'air (13).

5. Le bloc de vannes de toute revendication précédente comprenant une seconde conduite d'alimentation entre le second orifice d'air comprimé (13) et la vanne de commande (V_{INSS}).

6. Bloc de vannes (3) de toute revendication précédente, comprenant un capteur de pression de conduite d'alimentation (P1) qui peut fonctionner pour fournir un signal indiquant la pression d'air dans la seconde conduite d'alimentation (19).

7. Bloc de vannes (3) de toute revendication précédente, comprenant un premier capteur de pression de galerie (P2) qui est configuré pour fournir un premier signal indicatif de la pression de l'air dans la galerie (33), comprenant éventuellement en outre un second capteur de pression de galerie (P3) qui est configuré pour fournir un second signal indiquant la pression atmosphérique dans la galerie (33).

8. Bloc de vannes (3) de toute revendication précédente, dans lequel l'une quelconque des ou chaque vanne d'entrée (V_{1NC1}, V_{1NC2}), la vanne de commande (V_{INSS}), la ou chaque vanne d'échappement (E₁, E₂) et la ou chaque vanne de sortie (V_{O}) est commandée solénoïde.

9. Le bloc de vannes (3) de toute revendication précédente, dans lequel l'une quelconque des ou chaque vanne d'entrée (V_{1NC1}, V_{1NC2}), la vanne de commande (V_{INSS}), la ou chaque vanne d'échappement (E₁, E₂) et la ou chaque vanne de sortie (V_{O}) est configurée comme normalement fermée.

10. Bloc de soupapes (3) de toute revendication précédente, comprenant une soupape de décharge (V_{SAFE}), dans lequel la soupape de décharge (V_{SAFE}) est éventuellement actionnée par solénoïde, et dans lequel la soupape de décharge (V_{SAFE}) est éventuellement configurée comme normalement ouverte.

11. Le bloc de vannes (3) de toute revendication précédente, dans lequel la ou chaque vanne d'entrée (V_{1NC1}, V_{1NC2}) a un orifice de soupape ayant un diamètre sensiblement 4 fois le diamètre de celui de la soupape de commande (V_{INSS}), et/ou, dans laquelle la soupape de commande (V_{INSS}) a un orifice de soupape de 0,8 mm à 1,2 mm, et/ou dans laquelle la ou chaque soupape d'entrée (V_{1NC1}, V_{1NC2}) a un orifice de soupape de 3,5mm à 5mm.

12. CTIS (1) pour au moins un pneumatique (T) d'un véhicule (VH), le CTIS (1) comprenant :
un bloc de vannes (3) selon toute revendication précédente ;
une première source d'air comprimé (5) reliée au premier orifice d'air comprimé (17) ;
une deuxième source d'air comprimé (7) raccordée au deuxième orifice d'air comprimé (13); et
une conduite d'alimentation de pneumatique (TSL) pour au moins un pneumatique (T) du véhicule (VH), la ou chaque conduite d'alimentation de pneumatique (TSL) ayant une valve d'alimentation respective (PCV).

13. CTIS (1) selon la revendication 12, dans lequel la première source d'air comprimé (5) comprend un élément compresseur (9) et/ou dans lequel la deuxième source d'air comprimé (7) comprend un réservoir (11) en communication avec le deuxième orifice d'air comprimé (13).

14. CTIS (1) selon la revendication 12 ou la revendication 13, comprenant un contrôleur (15) agencé pour commander le fonctionnement du CTIS (1) et/ou dans lequel chaque vanne d'alimentation (PCV) est actionnée de manière pneumatique.

15. Véhicule comprenant le bloc de soupapes (3) de l'une quelconque des revendications 1 à 11, ou le CTIS (1) de l'une quelconque des revendications 12 à 14.
